# EUROPEAN PATENT APPLICATION

(11) **EP 3 012 575 A1**
(43) Date of publication of application: **27.04.2016**
(21) Application number: 15187866.7
(22) Date of filing: 01.10.2015
(51) Int. Cl.: G01B 5/06, G01B 5/207, G01B 5/28

(54) **APPARATUS FOR MEASURING THE INTERNAL SURFACE PROFILE OF A BODY HAVING A CAVITY**

(30) Priority: 21.10.2014 GB 201418689
(71) Applicant: Rolls-Royce plc, London SW1E 6AT (GB)
(72) Inventor: Twigg, Edwin Steven, Derby, Derbyshire DE24 8BJ (GB)
(74) Representative: Rolls-Royce plc

(57) **Abstract**

Apparatus for measuring an article having a cavity, typically a tube, the article having a wall with a first surface (typically the outer surface of the tube) and an opposing surface (typically the inner surface of the tube), the apparatus having a bearing structure (typically comprising wheels), configured to support the first surface, and a probe in a fixed horizontal position relative to the bearing structure that is configured to be biased against the opposing surface (typically inside the tube), the apparatus further comprising a detector that detects the relative vertical spacing of the probe and the bearing, and an actuator for translating the component horizontally relative to the bearing structure in order to record an inner surface profile and/or a wall thickness profile of the tube.

## Description

The present disclosure concerns a measuring apparatus and particularly a measuring apparatus that can measure the internal surface profile of an article having a cavity.

In certain situations it is desirable to be able to measure the internal surface profile of an article having a cavity. Such articles may be elongate e,g, shafts or pipes and have internal surfaces that are difficult to measure accurately.

Conventionally, bore gauges are known that manually measure the internal diameter of a bore by supplying a sprung beam that extends across the whole of the bore and which gives a measurement for the diameter. Care must be taken when inserting and removing the beam to prevent incorrect readings. A single reading is taken each time that means it time consuming to measure the entire article. Also, because the diameter is measured, not a single radius point it is very difficult to plot an inner surface profile.

The measured internal diameter is subtracted from a known external diameter to give an estimation of the wall thickness of the article being measured. The wall thickness is only an estimation because local variations around the circumference of the bore may result in an incorrect value where an out of spec wall thinness and an out of spec wall thickness are aligned to give an acceptable overall wall bore diameter.

CMM machines are known and require associated hardware that is capable of precisely locating a probe head that is in a known position in space. The apparatus used to repeatedly position the probe is expensive and highly complex. Care must be taken to isolate the probe and apparatus from any influences e.g. heat or vibration that may affect the position of the probe and give an incorrect readings. This makes CMM machines unsuitable for location in many workshops or repair environments due to the required big, heavy and rigid bases and precision movement hardware to ensure the accurate measurements of a static article.

The complex probe heads and support arms are typically too large to fit down smaller tube bores.

Ultrasonic measurements of inner profile are also known but lack accuracy.

It is an object of the invention to provide an improved measuring apparatus and method.

According to a first aspect of the invention there is provided apparatus for measuring an article having a wall with a first surface and an opposing surface, the apparatus having a bearing structure configured to support the first surface, and a probe in a fixed lateral position relative to the bearing structure that is configured to be biased against the opposing surface, the apparatus further comprising a detector that detects the relative spacing of the probe and the bearing, and an actuator for translating the component laterally relative to the bearing structure.

The probe may be mounted on an elongate arm through a pivotable mounting head.

The bearing structure may have angled faces, each face having a projection that carries a wheel, the wheels adapted to carry the component in use.

According to a further aspect of the invention there is provided a method of measuring the profile of a surface of an article, the method comprising the steps of providing apparatus having a bearing structure supporting a first surface of the article and a probe in a fixed lateral position relative to the bearing structure, biasing the probe against an opposing surface of the article and translating the article relative to the bearing structure.

The method may further comprise the steps of locating the article in a holder and translating the holder laterally with respect to the bearing structure thereby translating the article.

The article may be tubular and the first surface is the outside surface of the tube and the opposing surface of the article is the inside surface of the tube.

The probe may be mounted on an elongate arm, the arm extending within the component.

The probe may be biased against the opposing surface by a pivot.

The apparatus may further comprise processing equipment adapted to calculate the thickness of the article from data indicating the position of the probe and the position of the article.

A further probe may be provided to determine the position of the first surface.

The skilled person will appreciate that except where mutually exclusive, a feature described in relation to any one of the above aspects of the invention may be applied mutatis mutandis to any other aspect of the invention.

Embodiments of the invention will now be described by way of example only, with reference to the Figures, in which:
**Figure 1** is side view of a measuring apparatus
**Figure 2** is an alternative side view of a measuring apparatus
**Figure 3** is a cross-sectional view taken along line A-A of Figure 2
**Figure 4** is a graphical representation of the wall thickness of the component of Figure 2
**Figure 5** is a further cross-sectional view of measuring apparatus adapted to rotate the component.

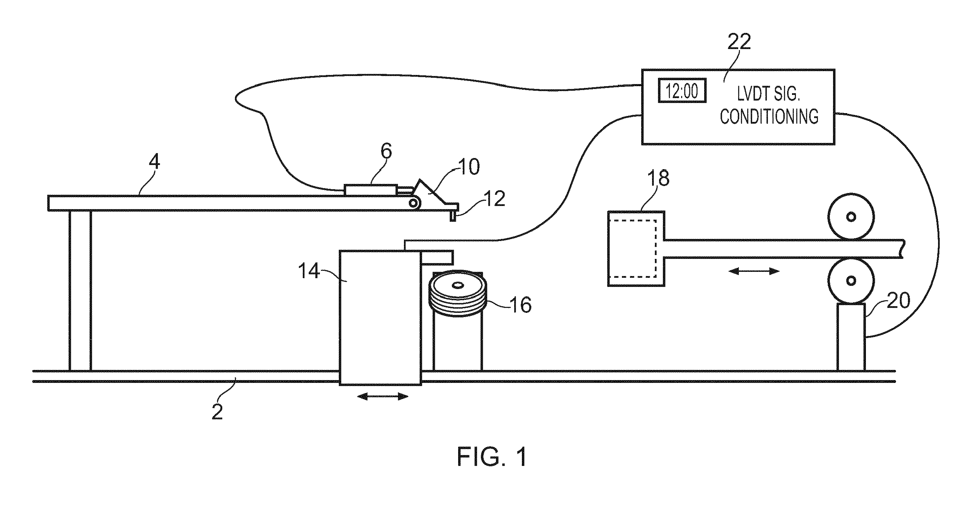

With reference to Figure 1 there is shown apparatus for measuring the internal surface profile of a component. The apparatus comprises a base 2, an elongate arm 4 fixed to the base, a transducer 6 capable of measuring the relative position of a probe contact and sending the information to a controller 8, a head 10 mounted to the arm 4 and which supports the probe contact 12. The apparatus further comprises a support for the component that comprises a fixed bearing 16 and a component holder 18 that can be translated via an actuator 20.

Any suitable actuator may be used to translate the component or article. For example, the actuator may be a piston, rollers, pulleys or some other device. The actuators may be electrically or mechanically driven. In the embodiment of Figure 1 the actuator is a pair of rollers acting on a holder 18 which supports the component to be measured.

Tubular components which contain a fluid in use can suffer from interaction with the fluid. Fluid in this context means any liquid, gas, or solids which can flow to approximate a liquid, etc. This interaction can cause pitting, etching, scoring or other damage that can then provide a nucleation site that accelerates the damage. In order to determine onward use e.g. return to service or re-bore of the component. If being re-bored, to minimise the amount of material removal, the depth of the damage needs to be measured and then an additional nominal depth of material removed. An inaccurate measurement means that unnecessary material removal may occur. The arrangement described in this application enables that any material loss or damage can be easily and precisely located. Once the positions of damage are located it may be possible to amend the use of the measured, or future components, or the process which generates the damage to improve the life of the components.

The base 2 should be stiff and may be the floor or a support mounted to the floor. For the measurements of smaller components the base may be mounted on a table or other support mechanism that rigidly supports the base. The base may be independently adjustable to the support e.g. by feet which can help with providing a levelled component. The base can have one or more rails or runners that allows an end indication platform 14 to translate linearly in a controlled manner. Where the base has rails, either projecting from the surface of the base of recessed within the base the support platform can have corresponding runners e.g. wheels or other low friction elements that help the translation of the platform. The platform is aligned with the end face of the component and is connected to a spool having a filament that is released as the platform is moved. By measuring the amount of filament that is released, or the rotation of the spool as the platform is moved, it is possible to easily determine the position of the component end face. Other arrangements may be used e.g. laser distance sensors, etc. but these may add unnecessary cost and complexity to the system.

The end face platform may be actively moved i.e. it has its own actuator that drives translation of the platform, or it may be passively moved by the component as the component is moved relative to the probe contact. It is preferable for it to be passively moved and in the arrangement described in the previous paragraph is biased against the end face of the component by the tension of the filament.

The component is supported by a bearing 16 and a component holder 18.

An elongate arm 4 is provided which carries a probe 12 in a fixed lateral position relative to the fixed bearing 16. The probe is mounted on a head that is pivotally mounted to the arm 4. A transducer can determine the position of the probe 12 depending on its spacing from the bearing 16. Rather than providing a pivoting mounting, the probe may be mounted on a spring or other biasing device and the transducer is coupled to measure the compression, or extension of the spring. Other architecture may be used as deemed appropriate by the person of skill in the art.

It is desirable for the arm to be sufficiently stiff such that is does not bend. A stiff, lightweight material e.g. carbon fibre may be used. Alternatively, an arm made of heavier material e.g. metal or a metal alloy may be used and which can have greater inertia. The heavier material makes it less prone to vibration, traffic rumbles, footfalls etc. than a lightweight material and can help to fix the probe in space.

The transducer signal is sent to a processing device such as a computer where calculations may be made to determine the position of the probe 12.

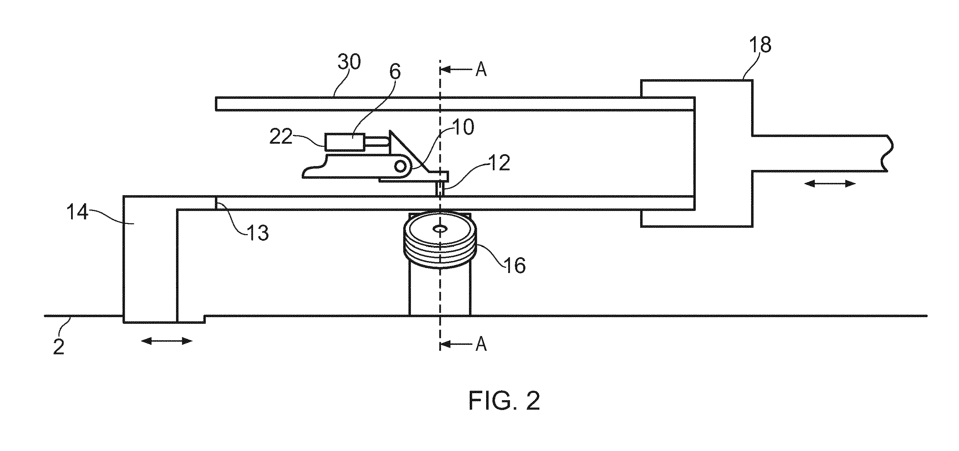

Figure 2 depicts part of the measuring apparatus and the associated component 30 being measured. The component 30 is mounted within the holder 18 that translates laterally relative to the bearing 16. In the embodiment shown the holder is mounted to a structure secured between rotating wheels e.g. gears or screws. A rack may be supplied on the structure such that on rotation of the rotation of the gears the gear teeth engage the teeth of the rack and cause translation of the holder. Alternatively the arrangement may provide rotation to the component 30 in addition to the lateral translation. Any appropriate actuator or driving means may be used as will be apparent to the person of skill in the art.

The component, a pipe in this embodiment, has an internal surface forming part of the component bore.

The bearing 16 locates against the outside surface of the component and is fixed in space such that the component can be moved in a lateral direction with respect to the bearing. Moving the tube relative to the bearing and putting a probe 12 close to the bearing points ensures that there is no requirement for precision movement hardware. Even if the mechanism that translates the component does not produce truly linear movement the measurement error is miniscule. In simple terms the movement up, down, left or right, of the beam on the end of the tube holder changes the angle of the component relative to the horizontal, or other plane, by only a small amount. This in turn means that the variation in distance between the bearing and the probe tip is also very small. The net result is a precise measurement with simple mechanical apparatus.

The probe 12 is located against the inside surface of the component in a fixed lateral position relative to the bearing 16. By fixed lateral position it is meant that the probe can translate in a movement away from or towards the bearing in a "Z" dimension but will not substantially move in an "X" or "Y" dimension. The "Z" direction is usually perpendicular to the orientation of the outer surface to the beating. The arm 4 carrying the head is long enough such that the probe can reach at least to the midpoint of the component but more preferably up to the full length of the component. The probe is biased to touch the inside surface of the component and its size, and the size of the arm must be sufficiently small to fit within the bore of the component without snagging or touching which could alter the readings given. Although the component is shown as being oriented horizontally and, as such the "Z" direction is vertical the component may be oriented in other directions e.g. vertically or at some other angle between horizontal or vertical. Where the orientation is different the "Z" direction is different i.e. for a vertically oriented component the "Z" direction is substantially horizontal.

The probe, at its simplest, is a pin or screw with an end that abuts the inside surface of the component. The end of the probe is preferably shaped such that it does not scratch the inside of the component and may have a coating, or have a tip formed of a material that avoids such damage.

The pin is rigidly attached to the mounting head such that deflection of the pin caused by variations in the profile of the inner surface of the component causes a concomitant movement of the head. The movement of the head acts on a transducer, such as a linear variable differential transformer LVDT, that can convert a linear displacement into an electrical signal. In the embodiment shown the transducer is aligned parallel to the arm such that linear movement in the direction the arm extends is required to give a signal. Advantageously this arrangement helps to reduce the cross-section of the apparatus allowing it to fit within a smaller space.

The head has a crest that has an edge that extends outwards, preferably normal, or near normal, to the direction of movement of the transducer and which abuts the LVDT to affect movement of the LVDT in response to movement of the head. The pin is offset from the pivot point to give a lever effect. For a lever ratio of 2.5:1, a 2.5mm movement of the pin gives a 1 mm movement of the of the transducer, which is typically within the nominal movement range of suitable LVDT transducers. Where the crest is arranged at an angle that is not normal to the direction of movement of the transducer, as in Figure 1, compensation to the signal may be required, or the maximum measurement limits of the LVDT may be reduced.

Calibration of the LVDT transducer signal to pin movement can be achieved simply by aligning the pin to a micrometer, adjusting the micrometer by a known amount and determining the transducer signal dependent on the micrometer adjustment.

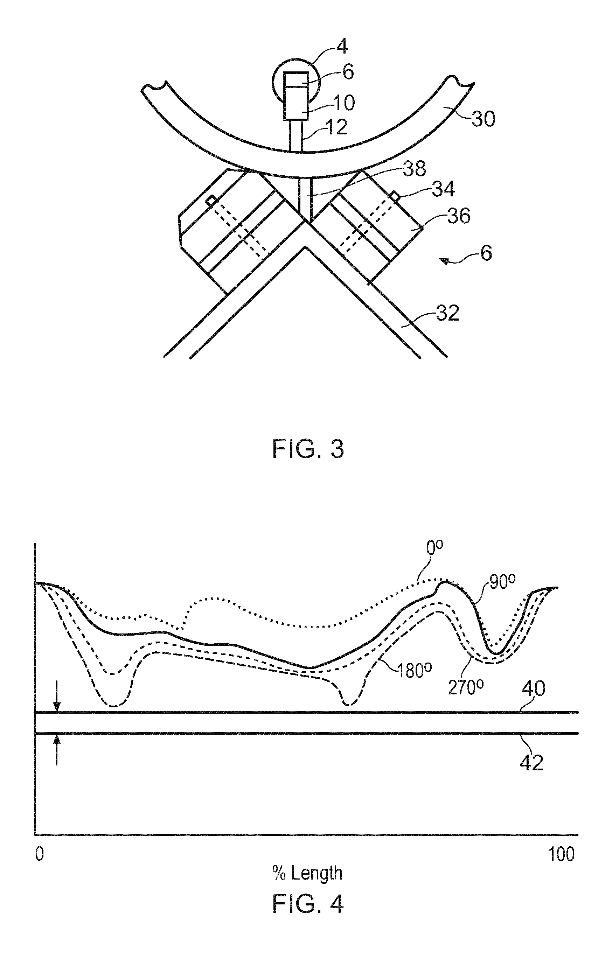

The bearing structure is depicted in Figure 3. A triangular support 32 has two pins 34 that provide an axle carrying bearing wheels 36. The wheels may be uniform across their thickness or be chamfered or otherwise profiled to provide a more secure and controlled bearing surface against which the component is mounted. The bearing arrangement helps to centre the component to aid its lateral translation. A further sensor may be provided to measure the outside surface profile of the component in real time, or the outside surface profile may have been measured earlier and appropriate information stored in a data file. However, because the bearing arrangement supporting the component continuously provides the outside surface of the component to a known position each time the further sensor should be considered to be an optional device.

In operation the component is mounted into the holder and this is translated such that it rests on the bearing with the probe brought into contact with the inner surface of the component. The lateral position of the component is captured based on the position of platform 14 that is aligned to the end face of the tube. The overhang 15 of the platform 14 allows the body to clear the bearing support whilst allowing the probe tip to reach the end of the tube. The probe 12 is first brought into contact with the inside surface of the tube 13 at a position close to end where the surface has not been damaged or varied in use, or where it can be easily measured by a measuring device such as a micrometer. The transducer is zeroed to this datum and the measurements that are taken of the internal surface are plotted relative to this datum. If necessary the head and / or arm can be moved radially to bring the pin into suitable contact with the inner surface of the component. This may be necessary, for example, where the tube is particularly thick, or thin.

The component is translated laterally over the bearing and the movement of the probe relative to the datum is measured by the transducer and sent to the processing apparatus. The data is aligned with data regarding the length along the component and optionally with data regarding the outside surface of the component. The data in respect of the outside surface is either taken earlier, or captured along with the data of the component and probe position. The alignment of the data enables the internal wall profile and, where the outside profile and internal profile are aligned to each other, the corresponding internal radius can be determined at a known position along the length of the component. The data of the internal wall profile may be plotted in graphical form as shown in Figure 4. Although Figure 4 shows wall thinning the probe can be set up to measure wall thickening, or both.
The location of the bearings 16 in close proximity to the probe 12 help to limit inaccuracy by ensuring that there is little scope for relative movement even if the translation or alignment of the component is not purely linear.

Measurement of the wall thickness at multiple circumferential positions can be achieved by firstly translating the component laterally in a first direction along its full, or as much of its length that needs to be measured, rotating the component around its axis a predetermined number of degrees and then translating the component laterally in the opposite direction to the first direction and measuring the component again. These steps may be repeated for as many different positions around the circumference as may be required to provide sufficient measurements for the component. It is preferable that at least four readings are taken e.g. at 0 degrees, 90 degrees, 180 degrees and 270 degrees around the circumference though more, or less may be used.

This provides a quick and efficient measurement method but possible backlash, pivot errors and inaccurate mount alignment could give different readings on the forward and reverse travel of the component. In certain circumstances therefore it is desirable for the measurements to all be taken in the same travel direction of the component. The bias or pre-load on the pin is selected to ensure that any slack in the pivot doesn't affect the accuracy or repeatability of the measurements taken.

Figure 4 depicts sample readings for a pipe taken at 0 degrees, 90 degrees, 180 degrees and 270 degrees around the circumference. The measurements are taken along the length of the pipe from 0 percent to 100 percent of the length. The variations are accounted for by erosion of the inside wall of the tube and is plotted with the greatest damage being exhibited in the 180 degree readings. The bore can be machined to the depth of the line 40 to remove all damage but, in case there is an error in the reading, a safety margin is applied and the bore machined to the depth of the further line 42. It will be appreciated that the measurement technique permits an optimum amount of material to be removed that eliminates all the damage without requiring excessive material to be taken away.

This process may be automated by using the processing apparatus to control the movement of the component and to determine when sufficient measurements have been taken. In the embodiment of Figure 4 further readings could be taken between the 180 and 270 degree and the 180 and 90 degree readings to establish whether the 180 degree reading is indeed the worst case. The safety margin depth 42 may make this further reading moot.

The apparatus may also be used to measure concentricity and roundness of the internal surface at multiple locations along the length of the component. For this method the component is translated such that the internal probe is located at the desired position at which the measurement is to be taken. The component is rotated about its axis, up to its full circumference, and measurements taken of both the internal and external surface profiles. It is desirable to take the measurements and align them with a known angular position e.g. by using a fiducial marker or some other marker. The component is then indexed laterally and the measurement steps repeated to give further data at further desired locations. To measure wall straightness a moveable trolley arrangement may be used. The trolley arrangement supports the ends of the component and moves it such that it doesn't tip. By ensuring the component ends are at roughly the same height no normalising of the probe data (internal or external) is required as compensation for the difference.

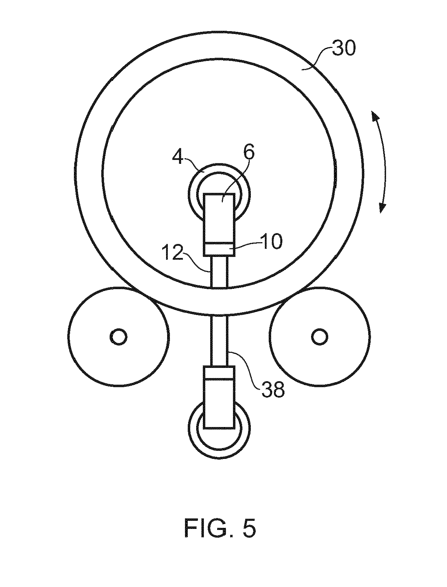

As shown in Figure 5, actuator drives may be provided to act upon the outside wall of the component to drive its rotation. Alternatively the component holder 18 may be rotated. In this embodiment the bearings may be ball bearings which allow both the rotational and linear translation of the component. The pivot point may be designed to avoid deflection around the axis of the arm which may introduce errors into the measurement.

It will be appreciated that the described apparatus and method provides a simple, quick and elegant way of measuring the internal surface of a component without resorting to complex or expensive alternative techniques. The method and apparatus may be automated and used to measure the length of long components such as, for example, pipes, shafts, pressure vessels, etc.

It will be understood that the invention is not limited to the embodiments above-described and various modifications and improvements can be made without departing from the various concepts described herein. Except where mutually exclusive, any of the features may be employed separately or in combination with any other features and the invention extends to and includes all combinations and sub-combinations of one or more features described herein in any form.

For example, the arm 4 need not be straight but may be curved or articulated to deliver the probe to a appropriate location.

## Claims

1. Apparatus for measuring an article (30) having a wall with a first surface and an opposing surface, the apparatus having a bearing structure (16) configured to support the first surface, and a probe (12) in a fixed lateral position relative to the bearing structure that is configured to be biased against the opposing surface, the apparatus further comprising a detector (6) that detects the relative spacing of the probe and the bearing, and an actuator (18) for translating the article laterally relative to the bearing structure.

2. Apparatus according to claim 1, wherein the probe (12) is mounted on an elongate arm (4) through a pivotable mounting head.

3. Appartaus according to claim 2, wherein the pivotable mounting head has a contact surface contacting the detector.

4. Apparatus according to claim 1 or claim 2, wherein the bearing structure has angled faces, each face having a projection (34) that carries a wheel (36), the wheels adapted to carry the article (30) in use.

5. A method of measuring the profile of a surface of an article, the method comprising the steps of providing apparatus having a bearing structure supporting a first surface of the article (30) and a probe (12) in a fixed lateral position relative to the bearing structure, biasing the probe against an opposing surface of the article and translating the article relative to the bearing structure.

6. A method according to claim 5, further comprising a detector (6) that detects movement of the probe away from, or towards, the bearing structure.

7. A method according to claim 5, wherein the movement of the probe is substantially orthogonal to the first surface.

8. A method according to any of claim 5 to claim 7, further comprising the steps of locating the article in a holder (18) and translating the holder laterally with respect to the bearing structure thereby translating the article.

9. A method according to any of claim 5 to claim 8, wherein the article (30) is tubular and the first surface is the outside surface of the tube and the opposing surface of the article is the inside surface of the tube.

10. A method according to claim 9 wherein the probe is mounted on an elongate arm (4), the arm extending within the article.

11. A method according to any of claim 5 to claim 10, wherein the probe is biased against the opposing surface by a pivot.

12. A method according to any of claim 5 to claim 11, wherein the apparatus further comprises processing equipment (22) adapted to calculate the thickness of the article from data indicating the position of the probe and the position of the article.

13. A method according to claim 12, wherein a probe (38) is provided to determine the position of the first surface.
